# EUROPEAN PATENT APPLICATION

(11) **EP 4 293 143 A1**
(43) Date of publication of application: **20.12.2023**
(21) Application number: 23167249.4
(22) Date of filing: 11.04.2023
(51) Int. Cl.: C25D 17/12, C25D 1/04

(54) **POSITIVE ELECTRODE PLATE FOR AN APPARATUS FOR MANUFACTURING COPPER FOIL AND APPARATUS FOR MANUFACTURING COPPER FOIL**

(30) Priority: 17.06.2022 KR 20220074190
(71) Applicant: SK Nexilis Co., Ltd., Jeollabuk-do 56137 (KR)
(72) Inventor: Ko, Su Jeong, 56137 Jeongeup-si (KR); Kim, Hye Won, 56137 Jeongeup-si (KR); Kim, Dong Woo, 56137 Jeongeup-si (KR)
(74) Representative: Ter Meer Steinmeister & Partner

(57) **Abstract**

The present disclosure relates to an apparatus for manufacturing a copper foil including a negative electrode drum on which a copper foil is electrodeposited in an electroplating method using an electrolyte, a positive electrode plate electrically connected with the negative electrode drum through the electrolyte, a positive electrode body configured to support the positive electrode plate, and a winding unit configured to wind the copper foil supplied from the negative electrode drum, wherein the positive electrode plate includes a base unit coupled to the positive electrode body, a first connecting unit coupled to the positive electrode body to overlap a portion of the base unit, and a base fastening unit coupling the base unit to the positive electrode body, the first connecting unit includes a first covering member disposed to overlap the base unit and a first inclined member extending to be inclined with respect to the first covering member, and the first covering member is disposed to cover the base fastening unit between the base fastening unit and the negative electrode drum.

## Description

### BACKGROUND

### Field of the Invention

The present disclosure relates to an apparatus for manufacturing a copper foil used for manufacturing various products such as a negative electrode for a secondary battery, a flexible printed circuit board, etc., and to a positive electrode plate therefore.

### Discussion of the Related Art

Copper foils are used for manufacturing various products such as negative electrodes for secondary batteries, flexible printed circuit boards (FPCBs), etc. The copper foils are manufactured through an electroplating method in which an electrolyte is supplied between a positive electrode and a negative electrode and then a current flows therebetween.

In manufacturing the copper foils through the electroplating method as described above, an apparatus for manufacturing a copper foil is used. The apparatus for manufacturing a copper foil includes a negative electrode drum for electrodepositing the copper foil using the electroplating method using an electrolyte, a positive electrode plate electrically connected to the negative electrode drum through the electrolyte, and a positive electrode body for supporting the positive electrode plate. The positive electrode plate is coupled to the positive electrode body through a base fastening member such as a screw.

Here, in the apparatus for manufacturing a copper foil according to the related art, the base fastening member and the positive electrode plate may be coupled to the positive electrode body to be spaced different distances from the negative electrode drum due to an assembly step. Therefore, in the apparatus for manufacturing a copper foil according to the related art, as current density is formed differently around the base fastening member and the positive electrode plate, current density in the electrolyte is not uniformly formed. Therefore, in the apparatus for manufacturing a copper foil according to the related art, since a thickness of the copper foil electrodeposited on the negative electrode drum is not formed uniformly, there is a problem that the quality of the copper foil is degraded.

### SUMMARY

The present disclosure is directed to providing a positive electrode plate for an apparatus for manufacturing a copper foil and an apparatus for manufacturing a copper foil including the same capable of preventing the quality of the copper foil from being degraded as current density is not uniformly formed due to a base fastening member.

This and other objects are solved by the features of the independent claim(s). In order to achieve the object, the present disclosure may include the following configuration.

According to one aspect of the present disclosure, a positive electrode plate for an apparatus for manufacturing a copper foil includes: a base unit, and a first connecting unit disposed to overlap a portion of the base unit; wherein the first connecting unit includes a first covering member disposed to overlap the base unit and a first inclined member extending to be inclined with respect to the first covering member, and the first covering member is disposed to cover a base fastening unit coupled to the base unit.

The positive electrode plate according to any aspect may include one or more of the following features:

The positive electrode plate may further include a second connecting unit disposed to overlap a portion of the first connecting unit.

The second connecting unit may be disposed to cover a connection fastening unit coupled to the first inclined member.

The base unit may include a first base member and a second base member covered by the first connecting unit. The first base member may be connected to the second base member. The first base member may be disposed to cover the second base member.

The base unit may include further a protruding member connected to protrude upward from the first base member. The first base member may be disposed to cover the second base member and/or disposed at the same height as the protruding member.

The second base member may be formed to have a smaller or decreasing thickness in a height direction as the second base member extends in a direction opposite to the first base member.

The first covering member may have a smaller or decreasing thickness as the first covering member extends in a direction opposite to the direction in which the second base member extends.

The first covering member may be disposed to overlap the second base member to cover the base fastening unit.

The base unit may include a first base member covered by the first connecting unit and a second base member connected to the first base member. The second connecting unit may be disposed to cover the base fastening unit coupled to the second base member.

According to one aspect of the present disclosure, an apparatus for manufacturing a copper foil includes: a base unit, and a first connecting unit disposed to overlap a portion of the base unit. The first connecting unit may include a first covering member disposed to overlap the base unit and a first inclined member extending to be inclined with respect to the first covering member. The first covering member is disposed to cover a base fastening unit coupled to the base unit.

According to one aspect of the present disclosure, an apparatus for manufacturing a copper foil includes: a negative electrode drum on which a copper foil is electrodeposited in an electroplating method using an electrolyte; a positive electrode plate, according to one of the herein described embodiments, electrically connected with the negative electrode drum through the electrolyte; a positive electrode body configured to support the positive electrode plate; and a winding unit configured to wind the copper foil supplied from the negative electrode drum, wherein the base fastening unit is configured to couple the base unit to the positive electrode body and the first covering member is disposed to cover the base fastening unit between the base fastening unit and the negative electrode drum.

The apparatus for manufacturing a copper foil may include one or more of the following features:

The base fastening unit may include a base fastening hole formed to pass through the base unit. The base fastening unit may include a base fastening member inserted into the base fastening hole to couple the base unit and the positive electrode body.

The first covering member may overlap the base unit to cover the base fastening hole and the base fastening member.

The first inclined member may be coupled to the positive electrode body by a connection fastening unit.

The connection fastening unit may not be formed on the first covering member so that the base fastening unit is not exposed to the negative electrode drum. The connection fastening unit may expose the first covering member.

The positive electrode plate may include a second connecting unit coupled to the positive electrode body to cover a portion of the base unit.

The base unit may include a first base member covered by the first connecting unit and a second base member connected to the first base member.

The second connecting unit may be disposed to cover the second base member.

The positive electrode plate may include a plurality of base fastening units.

The base fastening units may couple the first base member and the second base member to the positive electrode body at positions spaced apart from each other.

The first connecting unit may be disposed to cover the base fastening unit coupling the first base member to the positive electrode body.

The second connecting unit may be disposed to cover the base fastening unit coupling the second base member to the positive electrode body.

An included angle θ between the first covering member and the first inclined member may be formed as an obtuse angle. The included angle may be disposed to face the positive electrode body.

The apparatus may further comprise a second connecting unit coupled to the positive electrode body to overlap a portion of the first connecting unit.

The second connecting unit may be disposed to cover the first inclined member.

The base unit may be coupled to the positive electrode body at any one position of a left end of the positive electrode body and a right end of the positive electrode body.

The positive electrode plate may include a plurality of connecting units consecutively disposed to partially overlap each other in a direction in which the first connecting unit and the second connecting unit are disposed with respect to the base unit.

The base unit may be coupled to the positive electrode body between a left end of the positive electrode body and a right end of the positive electrode body.

The positive electrode plate may include a plurality of connecting units.

Some of the connecting units may be consecutively disposed to partially overlap each other in a direction in which the first connecting unit is disposed with respect to the base unit.

Some of the connecting units may be consecutively disposed to partially overlap each other in a direction in which the second connecting unit is disposed with respect to the base unit.

The base unit may include a first base member covered by the first covering member and a second base member connected to the first base member.

The base fastening unit may include a base fastening hole formed to pass through the second base member. The base fastening unit may include a base fastening member inserted into the base fastening hole to couple the second base member and the positive electrode body.

According to the present disclosure, it is possible to achieve the following effects.

According to the present disclosure, a base fastening unit for coupling a positive electrode plate to a positive electrode body can be implemented to be covered by a first connecting unit so as not to be directly exposed to the outside. Therefore, according to the present disclosure, by reducing a deviation of current density formed around the positive electrode plate, it is possible to improve the uniformity of the current density in an electrolyte. Therefore, according to the present disclosure, it is possible to manufacture a copper foil having improved quality.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a schematic perspective view of an apparatus for manufacturing a copper foil according to the present disclosure;
FIG. 2 is a schematic perspective view of a positive electrode body and a positive electrode plate in the apparatus for manufacturing a copper foil according to the present disclosure;
FIG. 3 is a conceptual diagram showing a base unit, a first connecting unit, and a second connecting unit in the apparatus for manufacturing a copper foil according to the present disclosure;
FIG. 4 shows exploded views of the base unit, the first connecting unit, and the second connecting unit of FIG. 3;
FIG. 5 is a schematic conceptual diagram showing an included angle between a first covering member and a first inclined member in the apparatus for manufacturing a copper foil according to the present disclosure;
FIG. 6 is a conceptual diagram showing a modified embodiment of the base unit and the first connecting unit in the apparatus for manufacturing a copper foil according to the present disclosure;
FIG. 7 shows exploded views of the base unit and the first connecting unit of FIG. 6;
FIG. 8 is a conceptual diagram showing another modified embodiment of the base unit and the first connecting unit in the apparatus for manufacturing a copper foil according to the present disclosure;
FIG. 9 shows exploded views of the base unit and the first connecting unit of FIG. 8;
FIG. 10 is a schematic conceptual diagram showing an embodiment in which the first connecting unit and the second connecting unit are disposed on both sides of the base unit in the apparatus for manufacturing a copper foil according to the present disclosure;
FIG. 11 shows exploded views of the first connecting unit and the second connecting unit of FIG. 10;
FIG. 12 is a schematic conceptual diagram showing a state in which a plurality of base fastening units are coupled to the base unit in the apparatus for manufacturing a copper foil according to the present disclosure; and
FIG. 13 shows exploded views of the plurality of base fastening units and the base unit of FIG. 12.

### DETAILED DESCRIPTION OF THE DISCLOSURE

Hereinafter, an apparatus for manufacturing a copper foil according to embodiments of the present disclosure will be described in detail with reference to the accompanying drawings.

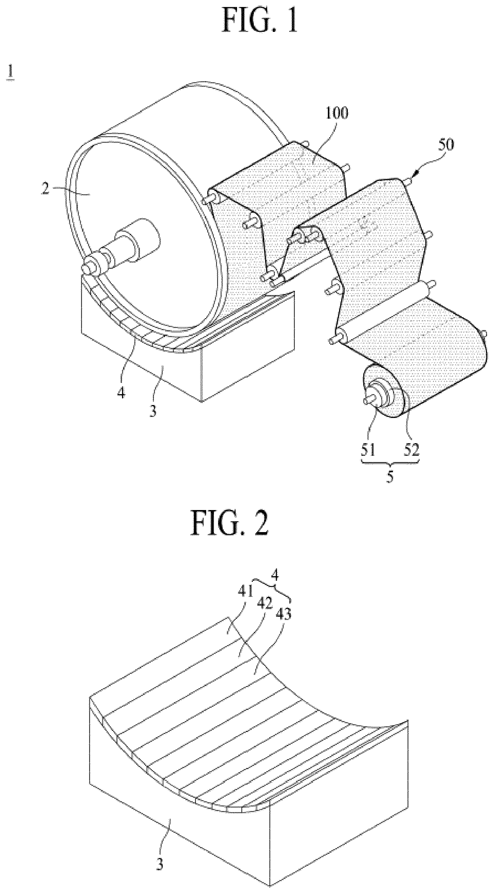

Referring to FIG. 1, an apparatus 1 for manufacturing a copper foil according to the present disclosure manufactures a copper foil 100 using an electroplating method. The apparatus 1 for manufacturing a copper foil according to the present disclosure may include a negative electrode drum 2, a positive electrode body 3, a positive electrode plate 4, and a winding unit 5.

Referring to FIG. 1, the copper foil 100 is electrodeposited on the negative electrode drum 2 by the electroplating method using an electrolyte together with the positive electrode plate 4. The copper foil 100 may be electrodeposited on the negative electrode drum 2 by the electroplating method using the electrolyte together with the positive electrode plate 4. When the negative electrode drum 2 and the positive electrode plate 4 are electrically connected through the electrolyte and a current flows therebetween, copper ions dissolved in the electrolyte may be reduced on the negative electrode drum 2. Therefore, the copper foil 100 may be electrodeposited on a surface of the negative electrode drum 2.

The negative electrode drum 2 may rotate about a rotational shaft. The negative electrode drum 2 may consecutively perform an electrodepositing operation of electrodepositing the copper foil 100 on the surface thereof and an unwinding operation of separating the electrodeposited copper foil 100 from the surface while rotating about the rotational shaft. The negative electrode drum 2 may be formed in a drum shape as a whole, but is not limited thereto and may be formed in a different shape as long as it may consecutively perform the electrodepositing operation and the unwinding operation while rotating about the rotational shaft. The negative electrode drum 2 may be rotated by a driving force generated by a negative electrode mechanism (not shown). The negative electrode drum 2 may be coupled to a frame (not shown). Although not shown, the frame may be installed on a bottom surface of a workshop in which the apparatus 1 for manufacturing a copper foil according to the present disclosure is installed.

Referring to FIG. 1, the positive electrode body 3 supports the positive electrode plate 4. The positive electrode body 3 may be disposed under the negative electrode drum 2. The positive electrode body 3 may be disposed to be spaced apart from a lower side of the negative electrode drum 2. An upper portion of the positive electrode body 3 and a lower portion of the negative electrode drum 2 may be formed in the same shape. For example, when the negative electrode drum 2 is formed in a circular rectangular shape to have a curved surface, the positive electrode body 3 may be formed in a semicircular rectangular shape to have a curved surface.

Referring to FIG. 1, the positive electrode plate 4 is electrically connected to the negative electrode drum 2 through the electrolyte. The positive electrode plate 4 may be coupled to the upper portion of the positive electrode body 3. The positive electrode plate 4 may be disposed to face the lower portion of the negative electrode drum 2. In this case, the positive electrode plate 4 may be coupled to the upper portion of the positive electrode body 3 to be spaced apart from the negative electrode drum 2.

Referring to FIG. 1, the winding unit 5 winds the copper foil 100. The copper foil 100 supplied from the negative electrode drum 2 may be wound around the winding unit 5. The winding unit 5 may be coupled to the frame.

The winding unit 5 may include a winding roller 51. The winding roller 51 may wind the copper foil 100 while rotating about a rotational shaft. The winding roller 51 may be formed in a drum shape as a whole, but is not limited thereto and may also be formed in other shapes as long as it is a shape capable of winding the copper foil 100 while rotating about the rotational shaft. The winding roller 51 may be rotated by a driving force generated by a winding mechanism (not shown).

A core 52 may be included in the winding unit 5. The core 52 may be mounted on the winding roller 51 to surround the winding roller 51. As the winding roller 51 rotates, the copper foil 100 may be wound around the core 52. The core 52 may be detachably included in on the winding unit 5. Therefore, when the winding of the copper foil 100 around the core 52 is completed or a defect occurs, a replacement operation of separating the core 52 from the winding unit 5 and mounting a new core 52 may be performed. Meanwhile, the core 52 and the winding roller 51 may be integrally formed. In this case, when the winding of the copper foil 100 around the core 52 is completed, the core 52 and the winding roller 51 may be integrally separated and then conveyed to equipment for a subsequent process.

The copper foil 100 may be conveyed from the negative electrode drum 2 to the winding unit 5 by a conveying unit 50. The conveying unit 50 conveys the copper foil 100. In the process of conveying the copper foil 100 from the negative electrode drum 2 to the winding unit 5 by the conveying unit 50, an operation of drying the copper foil 100, an operation of performing rust prevention treatment on the copper foil 100, and an operation of cutting a portion of the copper foil 100 may be performed. The conveying unit 50 may be disposed between the negative electrode drum 2 and the winding unit 5. The conveying unit 50 may be coupled to the frame. The conveying unit 50 may include a conveying roller (not shown). The conveying roller may convey the copper foil 100 from the negative electrode drum 2 to the winding unit 5 while rotating about a rotational shaft. The conveying roller may be formed in a drum shape as a whole, but is not limited thereto and may be formed in other shapes as long as it may convey the copper foil 100 while rotating about the rotational shaft. The conveying unit 50 may also include a plurality of conveying rollers. The conveying rollers may be disposed at positions spaced apart from each other to convey the copper foil 100. At least one of the conveying rollers may be rotated by a driving force generated by a conveying mechanism (not shown).

Here, the apparatus 1 for manufacturing a copper foil according to the present disclosure can be implemented to improve the uniformity of current density in the electrolyte positioned between the negative electrode drum 2 and the positive electrode plate 4. To this end, in the apparatus 1 for manufacturing a copper foil according to the present disclosure, the positive electrode plate 4 can be implemented as follows.

Referring to FIGS. 1 to 4, the positive electrode plate 4 may include a base unit 41, a first connecting unit 42, and a base fastening unit 44.

The base unit 41 is coupled to the positive electrode body 3. The base unit 41 may be coupled to one end of the positive electrode body 3. After the base unit 41 is coupled to the one end of the positive electrode body 3, the first connecting unit 42 may be coupled to the positive electrode body 3. For example, when the base unit 41 is coupled to a left end of the positive electrode body 3, the first connecting unit 42 may be coupled to a right side of the base unit 41. When the base unit 41 is coupled to a right end of the positive electrode body 3, the first connecting unit 42 may be coupled to a left side of the base unit 41. The base unit 41 may be coupled to the positive electrode body 3 by the base fastening unit 44.

The first connecting unit 42 is coupled to the positive electrode body 3 to overlap a portion of the base unit 41. A portion of the first connecting unit 42 may be disposed to cover the portion of the base unit 41. In this case, the portion of the first connecting unit 42 may be disposed on an upper surface of the base unit 41. Another portion of the first connecting unit 42 may be disposed to cover a portion of the positive electrode body 3. In this case, another portion of the first connecting unit 42 may be disposed on an upper surface of the positive electrode body 3.

The first connecting unit 42 may include a first covering member 421 and a first inclined member 422.

The first covering member 421 is disposed to overlap the base unit 41. The first covering member 421 may be disposed above the base unit 41. The first covering member 421 may be disposed to cover the upper surface of the base unit 41. After the base unit 41 is first disposed on the positive electrode body 3, the first connecting unit 42 may be connected to the positive electrode body 3 so that the first covering member 421 covers a portion of the base unit 41.

The first inclined member 422 extends to be inclined with respect to the first covering member 421. The first inclined member 422 may extend from the first covering member 421 toward a side opposite to a side at which the base unit 41 is disposed. Therefore, the first inclined member 422 may be disposed above the positive electrode body 3. The first inclined member 422 may be disposed to cover the upper surface of the positive electrode body 3.

The first covering member 421 may be disposed between the base fastening unit 44 and the negative electrode drum 2 to cover the base fastening unit 44. Therefore, the base fastening unit 44 may be covered by the first covering member 421 so as not to be directly exposed to the negative electrode drum 2. Therefore, the apparatus 1 for manufacturing a copper foil according to the present disclosure can reduce the deviation of the current density formed around the positive electrode plate 4, thereby improving the uniformity of the current density in the electrolyte. Therefore, the apparatus 1 for manufacturing a copper foil according to the present disclosure can improve the uniformity of a thickness of the copper foil 100, thereby manufacturing the copper foil 100 having more improved quality.

The first covering member 421 may be formed in a flat plate shape. The first covering member 421 may be formed in a plate shape having a constant thickness in a height direction. The base unit 41 may also be formed in a flat plate shape like the first covering member 421. Therefore, when the base unit 41 and the first covering member 421 overlap, the base unit 41 and the first covering member 421 may be disposed in close contact with each other. Meanwhile, when the base unit 41 is disposed on the upper surface of the positive electrode body 3, the base unit 41 is formed in a flat plate shape so as not to be in close contact with the positive electrode body 3 formed in a circular rectangular shape. In this case, the apparatus 1 for manufacturing a copper foil according to the present disclosure can be implemented to have a shorter length of the base unit 41 in a width direction, thereby reducing a space formed between the base unit 41 and the positive electrode body 3. In addition, in the apparatus 1 for manufacturing a copper foil according to the present disclosure, the base unit 41 and the positive electrode body 3 may be coupled in close contact with each other through a coupling operation of pressing and coupling the base unit 41 to the positive electrode body 3, thereby further reducing the space between the base unit 41 and the positive electrode body 3.

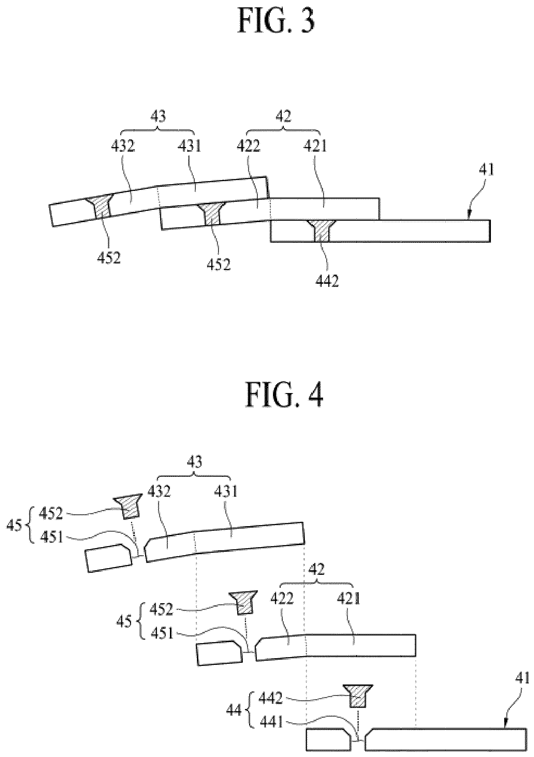

Referring to FIGS. 3 to 5, an included angle θ between the first covering member 421 and the first inclined member 422 may be formed as an obtuse angle. The included angle θ may be disposed to face the positive electrode body 3. Therefore, both ends of the first connecting unit 42 may be disposed to face the upper surface of the positive electrode body 3. In other words, one end of the first covering member 421 and one end of the first inclined member 422 may be disposed to face the upper surface of the positive electrode body 3. In this case, a certain space may be formed between the first connecting unit 42 and the positive electrode body 3, but since the first connecting unit 42 and the positive electrode body 3 are in close contact with each other through the coupling operation of pressing and coupling the first connecting unit 42 to the positive electrode body 3, the space may not be formed. Therefore, in the apparatus 1 for manufacturing a copper foil according to the present disclosure, the first connecting unit 42 may be coupled in close contact with the positive electrode body 3. The first connecting unit 42 may be formed in the same flat plate shape as the base unit 41 and then formed through a bending process.

Referring to FIGS. 3 and 4, the base fastening unit 44 couples the base unit 41 to the positive electrode body 3. The base unit 41 and the positive electrode body 3 may be coupled in close contact with each other by the base fastening unit 44. One or more base fastening units 44 may be formed to couple the base unit 41 to the positive electrode body 3.

The base fastening unit 44 may include a base fastening hole 441 and a base fastening member 442.

The base fastening hole 441 is formed to pass through the base unit 41. The base fastening member 442 may be inserted into the base fastening hole 441. The base fastening hole 441 may be formed in a shape corresponding to the base fastening member 442 so that the base fastening member 442 may be inserted thereinto.

The base fastening member 442 is inserted into the base fastening hole 441 to couple the base unit 41 and the positive electrode body 3. The base fastening member 442 may be formed to have a length longer than a thickness of the base unit 41 and may pass through the base unit 41. Therefore, a portion of the base fastening member 442 may pass through the base unit 41 and may be coupled to the positive electrode body 3. The base fastening member 442 may be inserted into the positive electrode body 3 from an upper side of the base unit 41. Therefore, the base fastening member 442 may couple the base unit 41 and the positive electrode body 3.

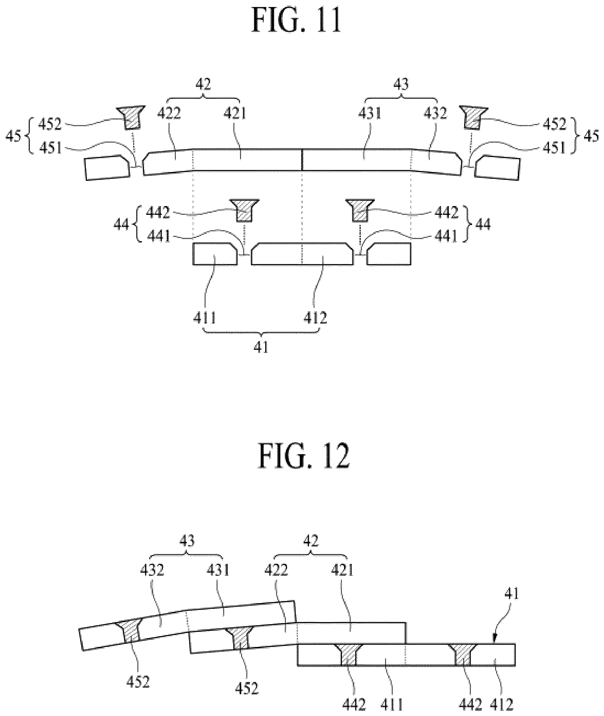

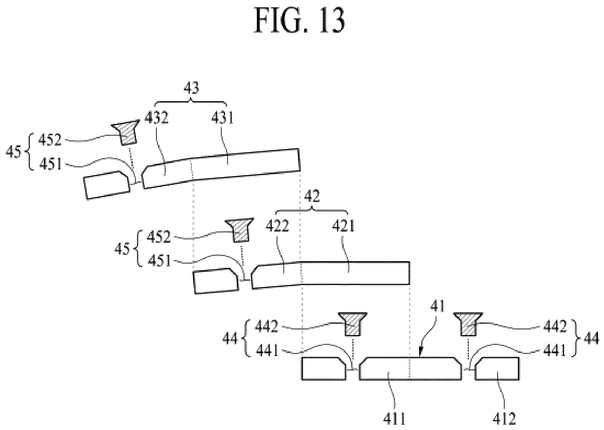

Meanwhile, referring to FIGS. 12 and 13, the base unit 41 may include a first base member 411 and a second base member 412.

The first base member 411 is covered by the first covering member 421. After the base unit 41 is coupled to the positive electrode body 3 by the base fastening unit 44, the base unit 41 may be coupled to the positive electrode body 3 so that the first covering member 421 covers the first base member 411. Therefore, the apparatus 1 for manufacturing a copper foil according to the present disclosure may cover the base fastening unit 44 formed on the first base member 411 through the first connecting unit 42.

The second base member 412 is connected to the first base member 411. The second base member 412 may be coupled to the positive electrode body 3 together with the first base member 411. In this case, the base fastening unit 44 may be formed on the second base member 412. In other words, the base fastening unit 44 may include the base fastening hole 441 formed to pass through the second base member 412 and the base fastening member 442 inserted into the base fastening hole 441 to couple the second base member 412 and the positive electrode body 3. Therefore, the base unit 41 may be coupled to the positive electrode body 3 through the base fastening unit 44 coupled to the first base member 411 and the base fastening unit 44 coupled to the second base member 412.

Referring to FIGS. 3 and 4, the positive electrode plate 4 may include a second connecting unit 43.

The second connecting unit 43 is coupled to the positive electrode body 3 to overlap a portion of the first connecting unit 42. The second connecting unit 43 may be disposed on a side opposite to the side at which the base unit 41 is disposed. A portion of the second connecting unit 43 may be disposed above the first inclined member 422 and disposed to cover an upper surface of the first inclined member 422. The other portion of the second connecting unit 43 may be disposed above the positive electrode body 3 and disposed to cover the upper surface of the positive electrode body 3.

The second connecting unit 43 may include a second covering member 431 and a second inclined member 432.

The second covering member 431 is disposed to overlap the first inclined member 422. The second covering member 431 may be disposed above the first inclined member 422. After the first connecting unit 42 is first disposed on the positive electrode body 3 to cover a portion of the base unit 41, the second connecting unit 43 may be coupled to the positive electrode body 3 so that the second covering member 431 covers the portion of the first connecting unit 42.

The second inclined member 432 extends from the second covering member 431. The second inclined member 432 may extend from the second covering member 431 toward a side opposite to a side at which the first connecting unit 42 is disposed. Therefore, the second inclined member 432 may be disposed to cover the positive electrode body 3. An included angle between the second inclined member 432 and the second covering member 431 may be formed as an obtuse angle.

Referring to FIGS. 3 and 4, the positive electrode plate 4 may include a connection fastening unit 45.

The connection fastening unit 45 couples the first connecting unit 42 to the positive electrode body 3. In order to couple the first connecting unit 42 and the positive electrode body 3, one or more connection fastening units 45 are required. In this case, the connection fastening unit 45 may be formed on the first inclined member 422. On the other hand, the connection fastening unit 45 may not be formed on the first covering member 421 so that the base fastening unit 44 is not exposed to the negative electrode drum 2. Therefore, the apparatus 1 for manufacturing a copper foil according to the present disclosure is implemented so that the base fastening unit 44 is covered by the first covering member 421 so as not to be directly exposed to the outside. Therefore, the apparatus 1 for manufacturing a copper foil according to the present disclosure can reduce the deviation of the current density formed around the positive electrode plate 4, thereby improving the uniformity of the current density in the electrolyte.

A plurality of connection fastening units 45 may be formed. In this case, the connection fastening unit 45 may couple each of the first connecting unit 42 and the second connecting unit 43 to the positive electrode body 3. As described above, the first connecting unit 42 may be coupled to the positive electrode body 3 through the connection fastening unit 45 formed on the first inclined member 422. In this case, the connection fastening unit 45 may be formed on the second inclined member 432 of the second connecting unit 43. Therefore, the second covering member 431 may be disposed to overlap the first inclined member 422 and disposed to cover the connection fastening unit 45 formed on the first inclined member 422. As described above, in the apparatus 1 for manufacturing a copper foil according to the present disclosure, the base unit 41, the first connecting unit 42, and the second connecting unit 43 may be coupled to the positive electrode body 3 to be disposed to extend in one direction to partially overlap one another. In this case, the first connecting unit 42 may be disposed to cover the base fastening unit 44 formed on the base unit 41, and the second connecting unit 43 may be disposed to cover the connection fastening unit 45 formed on the second connecting unit 43. Although not shown, another connecting unit of the positive electrode plate 4 may be disposed to cover the connection fastening unit 45 formed on the second connecting unit 43. Therefore, in the apparatus 1 for manufacturing a copper foil according to the present disclosure, the numbers of base fastening units 44 and connection fastening units 45 for coupling the positive electrode plate 4 to the positive electrode body 3, which are exposed to the outside, can be reduced. Therefore, the apparatus 1 for manufacturing a copper foil according to the present disclosure can further improve the uniformity of the current density in the electrolyte, thereby manufacturing the copper foil 100 having more improved quality.

Meanwhile, when the base unit 41 is coupled to the positive electrode body 3 at any one position of the left end of the positive electrode body 3 and the right end of the positive electrode body 3, the positive electrode plate 4 may include a plurality of connecting units consecutively disposed to partially overlap each other in a direction in which the first connecting unit 42 and the second connecting unit 43 are disposed with respect to the base unit 41.

Hereinafter, a modified embodiment of the base unit 41 and the first connecting unit 42 will be described with reference to FIGS. 2, 6, and 7.

The base unit 41 may include the first base member 411, the second base member 412, and a protruding member 413. The first base member 411 is connected to the second base member 412. The second base member 412 is covered by the first connecting unit 42. The protruding member 413 protrudes upward from the first base member 411. The upward means a side opposite to a side at which the positive electrode body 3 is disposed. In this case, the first covering member 421 may be disposed to cover the second base member 412 and disposed at the same height as the protruding member 413.

The base unit 41 may be coupled to the positive electrode body 3 by the base fastening unit 44 formed on the second base member 412. The first covering member 421 may be disposed above the second base member 412 and disposed to cover an upper surface of the second base member 412. In this case, the first covering member 421 and the protruding member 413 may be formed to have the same thickness. Therefore, an upper surface of the first covering member 421 and an upper surface of the protruding member 413 may be disposed to form one surface connected to each other. The first inclined member 422 may extend to be inclined with respect to the first covering member 421. When the second connecting unit 43 is provided, the second connecting unit 43 may be formed in a shape substantially the same as that of the first connecting unit 42.

When the base fastening unit 44 includes the base fastening hole 441 and the base fastening member 442, the base fastening hole 441 may be formed in the second base member 412, and the base fastening member 442 may couple the second base member 412 to the positive electrode body 3. Although not shown, the base unit 41 may also include a fastening hole formed to pass through the protruding member 413 and the first base member 411. In this case, a fastening means may be inserted into the fastening hole to couple the protruding member 413 and the first base member 411 to the positive electrode body 3.

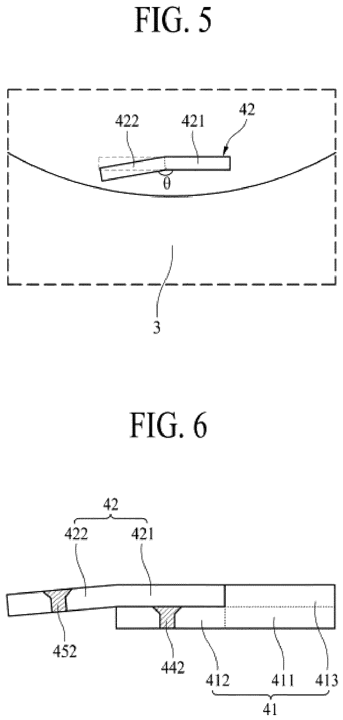

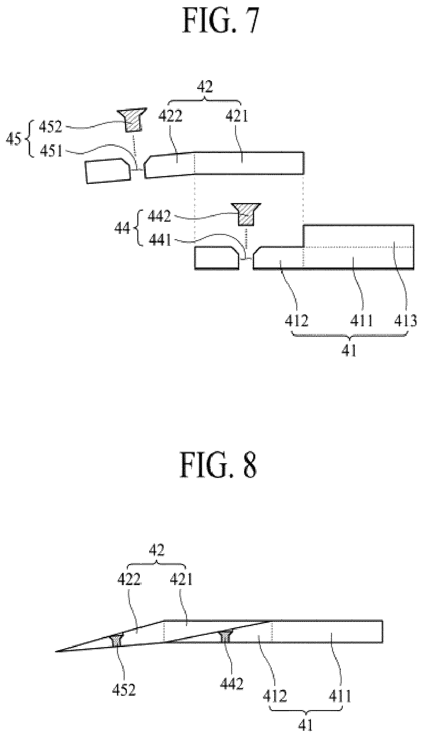

Meanwhile, the base unit 41 shown in FIGS. 6 and 7 may be coupled to the right end of the positive electrode body 3. In this case, the second base member 412 may extend to protrude to a left side of the first base member 411. The first connecting unit 42 may be disposed on the left side of the base unit 41 so that the first covering member 421 covers the second base member 412. Although not shown, when the base unit 41 is coupled to the left end of the positive electrode body 3, the second base member 412 may extend to protrude to a right side of the first base member 411. The first connecting unit 42 may be disposed on the right side of the base unit 41 so that the first covering member 421 covers the second base member 412.

Hereinafter, another modified embodiment of the base unit 41 and the first connecting unit 42 will be described with reference to FIGS. 2, 8, and 9. Since the base unit 41 and the first connecting unit 42 according to another modified embodiment can be implemented to be substantially the same as the base unit 41 and the first connecting unit 42 according to the above-described modified embodiment, the differences therebetween will be mainly described below.

The first base member 411 may be formed in a flat plate shape having a constant thickness in the height direction. The second base member 412 may be formed to have a smaller thickness in the height direction as the second base member 412 extends to protrude from the first base member 411. For example, the second base member 412 may be formed in a plate shape having one end pointed.

The first covering member 421 may be formed to have a smaller thickness in the height direction as the first covering member 421 extends in a direction opposite to a direction in which the second base member 412 extends. When the first covering member 421 is disposed to overlap the second base member 412 to cover the base fastening unit 44, the thickness in the height direction of a portion in which the first covering member 421 and the second base member 412 overlap can be implemented to be the same as the thickness of the first base member 411 in the height direction. Therefore, in the apparatus 1 for manufacturing a copper foil according to the present disclosure, since the upper surface of the positive electrode plate 4 is formed at the same height, the upper surface of the positive electrode plate 4 can be implemented to form one connected surface. For example, as shown in FIG. 8, a portion in which the second base member 412 and the first covering member 421 overlap and the first base member 411 can be implemented in the same shape. Therefore, the first base member 411, the second base member 412, and the first covering member 421 may be coupled to be implemented in a flat plate shape.

The first inclined member 422 may be formed to have a smaller thickness in the height direction is reduced as the first inclined member 422 extends in a direction opposite to a direction in which the first covering member 421 extends. When the second connecting unit 43 is provided, the second connecting unit 43 may be formed in a shape substantially the same as that of the first connecting unit 42. Therefore, the apparatus 1 for manufacturing a copper foil according to the present disclosure can be implemented so that the entire thickness of the positive electrode plate 4 in the height direction is uniformly formed through the coupling operation of pressing and coupling the base unit 41, the first connecting unit 42, and the second connecting unit 43 to the positive electrode body 3.

The above description has been made on the basis of the embodiment in which the base unit 41 is coupled to the positive electrode body 3 at any one position of the left end of the positive electrode body 3 and the right end of the positive electrode body 3, but the base unit 41 may also be coupled to the positive electrode body 3 between the left end of the positive electrode body 3 and the right end of the positive electrode body 3. The embodiment will be described in detail with reference to FIGS. 2, 10, and 11 as follows.

The base unit 41 may be covered by the first connecting unit 42 and the second connecting unit 43. In this case, the first connecting unit 42 may cover a portion of the base unit 41, and the second connecting unit 43 may cover another portion of the base unit 41. In other words, the second connecting unit 43 and the first connecting unit 42 may be disposed to cover the base unit 41 at different positions. The second connecting unit 43 and the first connecting unit 42 may also be disposed to cover the entire base unit 41. For example, when the first connecting unit 42 covers a portion of the left side of the base unit 41, the second connecting unit 43 may be disposed to cover a portion of the right side of the base unit 41. When the first connecting unit 42 covers a portion of the right side of the base unit 41, the second connecting unit 43 may be disposed to cover a portion of the left side of the base unit 41.

When the base unit 41 includes the first base member 411 and the second base member 412, the first connecting unit 42 may be disposed to cover the first base member 411. The second connecting unit 43 may be disposed to cover the second base member 412.

The positive electrode plate 4 may include a plurality of base fastening units 44. The base fastening units 44 may couple the first base member 411 and the second base member 412 to the positive electrode body 3 at positions spaced apart from each other. In this case, the first connecting unit 42 may be disposed to cover the base fastening unit 44 coupling the first base member 411 to the positive electrode body 3. The second connecting unit 43 may be disposed to cover the base fastening unit 44 coupling the second base member 412 to the positive electrode body 3. As described above, since the first connecting unit 42 and the second connecting unit 43 are implemented to cover the base fastening units 44, the apparatus 1 for manufacturing a copper foil according to the present disclosure is implemented so that the base fastening units 44 are covered by the first connecting unit 42 and the second connecting unit 43 so as not to be directly exposed to the outside even when the base unit 41 is disposed between the left end of the positive electrode body 3 and the right end of the positive electrode body 3. Therefore, the apparatus 1 for manufacturing a copper foil according to the present disclosure can reduce the deviation of the current density formed around the positive electrode plate 4, thereby improving the uniformity of the current density in the electrolyte. The first base member 411 and the second base member 412 may also be integrally formed.

When the first connecting unit 42 and the second connecting unit 43 are coupled to both sides of the base unit 41, some other connecting units of the positive electrode plate 4 may be consecutively disposed to partially overlap each other in the direction in which the first connecting unit 42 is disposed with respect to the base unit 41. Some of the other connecting units of the positive electrode plate 4 may be consecutively disposed to overlap each other in the direction in which the second connecting unit 43 is disposed with respect to the base unit 41. In this case, the connecting units may be consecutively disposed to overlap each other so that the positive electrode plate 4 covers the entire upper surface of the positive electrode body 3.

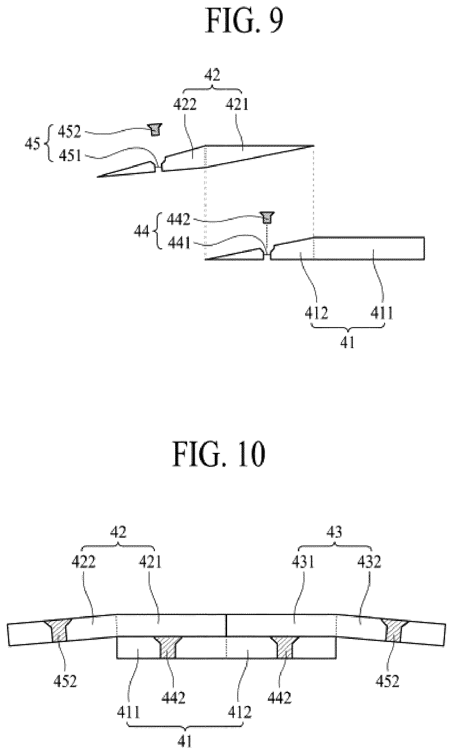

The number of base fastening units 44 may be formed to correspond to the number of base members of the base unit 41. FIG. 10 shows that the two base fastening units 44 are formed, but the present disclosure is not limited thereto, and three or more base fastening units 44 may also be formed.

When the first connecting unit 42 and the second connecting unit 43 are disposed on both sides of the base unit 41, the first connecting unit 42 may be coupled to the positive electrode body 3 by the connection fastening unit 45 formed on the first inclined member 422. The second connecting unit 43 may be coupled to the positive electrode body 3 by the connection fastening unit 45 formed on the second inclined member 432.

The present disclosure described above is not limited to the above-described embodiments and the accompanying drawings, and it will be apparent to those skilled in the art to which the present disclosure pertains that various substitutions, modifications, and changes are possible without departing from the technical idea of the present disclosure.

## Claims

1. A positive electrode plate (4) for an apparatus for manufacturing a copper foil, comprising:
a base unit (41); and
a first connecting unit (42) disposed to overlap a portion of the base unit (41),
wherein the first connecting unit (42) includes a first covering member (421) disposed to overlap the base unit (41) and a first inclined member (422) extending to be inclined with respect to the first covering member (421), and
the first covering member (421) is disposed to cover a base fastening unit (44) coupled to the base unit (41).

2. The positive electrode plate of claim 1, further comprising a second connecting unit (43) disposed to overlap a portion of the first connecting unit (42),
wherein the second connecting unit (43) is disposed to cover a connection fastening unit (45) coupled to the first inclined member (422).

3. The positive electrode plate of claim 1 or 2, wherein the base unit (41) includes a first base member (411), a second base member (412) covered by the first connecting unit (42), and a protruding member (413) connected to protrude upward from the first base member (411),
the first base member (411) is connected to the second base member (412) and/or disposed to cover the second base member (412) and disposed at the same height as the protruding member (413).

4. The positive electrode plate of claim 3, wherein the second base member (412) is formed to have a smaller thickness in a height direction as the second base member (412) extends in a direction opposite to the first base member (411).

5. The positive electrode plate of claim 4, wherein the first covering member (421) has a smaller thickness as the first covering member (421) extends in a direction opposite to the direction in which the second base member (412) extends, and/or
the first covering member (421) is disposed to overlap the second base member (412) to cover the base fastening unit (44).

6. The positive electrode plate of claim 1, further comprising a second connecting unit (43) disposed to overlap a portion of the first connecting unit (42),
wherein the base unit (41) includes a first base member (411) covered by the first connecting unit (42) and a second base member (412) connected to the first base member (411), and
the second connecting unit (43) is disposed to cover the base fastening unit (44) coupled to the second base member (412).

7. An apparatus for manufacturing a copper foil, comprising:
a negative electrode drum (2) on which a copper foil (100) is electrodeposited in an electroplating method using an electrolyte;
a positive electrode plate (4), according to any one of the preceding claims, electrically connected with the negative electrode drum (2) through the electrolyte;
a positive electrode body (3) configured to support the positive electrode plate (4); and
a winding unit (5) configured to wind the copper foil (100) supplied from the negative electrode drum (2),
wherein,
the base fastening unit (44) is configured to couple the base unit (41) to the positive electrode body (3), and
the first covering member (421) is disposed to cover the base fastening unit (44) between the base fastening unit (44) and the negative electrode drum (2).

8. The apparatus of claim 7, wherein the base fastening unit (44) includes a base fastening hole (441) formed to pass through the base unit (41) and a base fastening member (442) inserted into the base fastening hole (441) to couple the base unit (41) and the positive electrode body (3), and
the first covering member (421) overlaps the base unit (41) to cover the base fastening hole (441) and the base fastening member (442).

9. The apparatus of claim 7 or 8, wherein the first inclined member (422) is coupled to the positive electrode body (3) by a connection fastening unit (45), and/or
the connection fastening unit (45) is not formed on the first covering member (421) so that the base fastening unit (44) is not exposed to the negative electrode drum (2).

10. The apparatus according to any one of claims 7 and 8, wherein the positive electrode plate (4) includes a second connecting unit (43) coupled to the positive electrode body (3) to cover a portion of the base unit (41),
the base unit (41) includes a first base member (411) covered by the first connecting unit (42) and a second base member (412) connected to the first base member (411), and
the second connecting unit (43) is disposed to cover the second base member (412).

11. The apparatus of claim 10, wherein the positive electrode plate (4) includes a plurality of base fastening units (44),
the base fastening units (44) couple the first base member (411) and the second base member (412) to the positive electrode body (3) at positions spaced apart from each other,
the first connecting unit (42) is disposed to cover the base fastening unit (44) coupling the first base member (411) to the positive electrode body (3), and
the second connecting unit (43) is disposed to cover the base fastening unit (44) coupling the second base member (412) to the positive electrode body (3).

12. The apparatus according to any one of claims 7 to 11, wherein an included angle (θ) between the first covering member (421) and the first inclined member (422) is formed as an obtuse angle, and
the included angle (θ) is disposed to face the positive electrode body (3).

13. The apparatus according to any one of claims 7 to 9, further comprising a second connecting unit (43) coupled to the positive electrode body (3) to overlap a portion of the first connecting unit (42),
wherein,
the second connecting unit (43) is disposed to cover the first inclined member (422),
the base unit (41) is coupled to the positive electrode body (3) at any one position of a left end of the positive electrode body (3) and a right end of the positive electrode body (3), and
the positive electrode plate (4) includes a plurality of connecting units consecutively disposed to partially overlap each other in a direction in which the first connecting unit (42) and the second connecting unit (43) are disposed with respect to the base unit (41).

14. The apparatus of claim 10 or 13, wherein the base unit (41) is coupled to the positive electrode body (3) between a left end of the positive electrode body (3) and a right end of the positive electrode body (3),
the positive electrode plate (4) includes a plurality of connecting units,
some of the connecting units are consecutively disposed to partially overlap each other in a direction in which the first connecting unit (42) is disposed with respect to the base unit (41), and
some of the connecting units are consecutively disposed to partially overlap each other in a direction in which the second connecting unit (43) is disposed with respect to the base unit (41).

15. The apparatus according to any one of claims 7 to14, wherein the base unit (41) includes a first base member (411) covered by the first covering member (421) and a second base member (412) connected to the first base member (411), and
the base fastening unit (44) includes a base fastening hole (441) formed to pass through the second base member (412) and a base fastening member (442) inserted into the base fastening hole (441) to couple the second base member (412) and the positive electrode body (3).
